# DEMANDE DE BREVET EUROPEEN

(11) **EP 0 762 432 A1**
(43) Date de publication de la demande: **12.03.1997**
(21) Numéro de dépôt: 96401862.6
(22) Date de dépôt: 29.08.1996
(51) Int. Cl.: G21C 17/003, G21C 9/016, G01K 1/02

(54) **Dispositif de détection et de surveillance du percement du fond de la cuve d'un réacteur nucléaire comportant au moins un thermocouple**

(30) Priorité: 11.09.1995 FR 9510623
(71) Demandeur: ATEA SOCIETE ATLANTIQUE DE TECHNIQUES AVANCEES, F-44470 Carquefou (FR)
(72) Inventeur: Baldy, Jean, 92500 Rueil-Malmaison (FR)
(74) Mandataire: Bouget, Lucien

(57) **Abrégé**

Le dispositif de détection comporte au moins un thermocouple (10) disposé à l'aplomb du fond de la cuve du réacteur nucléaire, ayant une première branche (9) en un premier matériau métallique et au moins une seconde branche (11) en un second matériau métallique différent du premier matériau soudé en un point de la première branche constituant une soudure chaude du thermocouple (10). La première branche (9) du thermocouple présente la forme d'un profilé creux allongé. Le dispositif comporte de plus des moyens d'exploitation des mesures effectuées par les thermocouples (10).

## Description

L'invention concerne un dispositif de détection et de surveillance du percement du fond de la cuve d'un réacteur nucléaire, dans le cas d'une fusion du coeur du réacteur et d'équipements internes disposés à l'intérieur de la cuve du réacteur due à un fonctionnement accidentel du réacteur nucléaire, le dispositif de détection comportant au moins un thermocouple. En particulier, le dispositif suivant l'invention peut être utilisé pour la détection du percement du fond de la cuve d'un réacteur nucléaire refroidi par de l'eau sous pression.

Les réacteurs nucléaires à eau sous pression comportent une cuve de forme générale cylindrique renfermant le coeur du réacteur nucléaire, disposée avec son axe vertical dans un puits de cuve cylindrique ayant un fond inférieur situé à l'aplomb de la cuve. Le coeur du réacteur nucléaire est refroidi par de l'eau sous pression circulant dans le circuit primaire du réacteur et à l'intérieur de la cuve en contact avec les assemblage de combustible.

Dans le cas de certains accidents survenant dans le réacteur et se traduisant par une perte de la fonction de refroidissement du coeur, on doit envisager, compte tenu des conséquences très graves qui en résulteraient, bien que la probabilité d'un tel événement soit extrêmement faible et pratiquement nulle, le cas où les injections de secours du réacteur ne pourraient pas être mises en fonctionnement. Il peut alors se produire une séquence accidentelle conduisant à la fusion du coeur et des équipements internes du réacteur en l'absence d'eau de refroidissement, ce qui peut entraîner une destruction par percement du fond de la cuve et l'écoulement de la masse du coeur et des matériaux entourant le coeur, dans le puits en béton contenant la cuve du réacteur.

Le contact de la masse en fusion du combustible et des matériaux entourant le combustible, appelé corium, dont la température peut atteindre des valeurs de l'ordre de 2500°C, en l'absence de refroidissement, peut entraîner la destruction complète du fond du puits de cuve.

En fonctionnement normal du réacteur, sans accident, les conditions ambiantes sont très contraignantes dans le puits de cuve. En effet, il existe une irradiation permanente qui augmente dans le temps au cours de la durée de vie du réacteur. Le débit de dose cumulé sur la durée de vie prévue de 40 ans d'un réacteur peut atteindre 280 Mrad.

Il est important, dans l'hypothèse de l'accident par perte de réfrigérant évoqué ci-dessus, de surveiller l'évolution du phénomène et particulièrement l'évolution de l'état du fond de la cuve pour définir si celui-ci est partiellement ou totalement fondu, et si le corium s'écoule à travers la cuve, en quelques points seulement ou sur la surface totale du fond.

Les conditions d'ambiance dans le puits de cuve, dans le cas d'un percement de la cuve, font qu'il est difficile de placer des caméras dans celui-ci afin de visualiser, sur un écran, l'évolution du phénomène. En effet, les vapeurs des matériaux en fusion, ajoutées à la vapeur d'eau de refroidissement vont provoquer un aveuglement du dispositif de surveillance.

Afin de surveiller l'état du fond de la cuve, on détermine la répartition des températures du fond du puits de cuve disposé à l'aplomb du fond de la cuve. On peut visualiser les résultats de manière à réaliser une cartographie thermique du fond du puits de la cuve. En effet, le corium en fusion constitué par le coeur et les équipements internes fondus qui s'écoule de la cuve se répand sur le fond du puits de cuve et provoque une augmentation de la température du fond, en particulier à l'aplomb de la zone percée du fond de la cuve.

Dans la demande de brevet FR-A-95-04342 déposée au nom de la société FRAMATOME, on a décrit un procédé et un dispositif permettant de détecter un percement de la cuve d'un réacteur nucléaire par mesure en continu de la température en une pluralité de points répartis sur la surface du fond du puits de cuve. En particulier, les mesures de température peuvent être réalisées en utilisant des moyens optiques et en particulier une pluralité de fibres optiques disposées sur le fond du puits de cuve, à l'aplomb du fond de la cuve. Un tel dispositif optique présente l'inconvénient que les fibres optiques se détériorent sous irradiation dans le fond du puits de cuve. Il faut donc prévoir un système de surveillance de l'état des fibres pour déterminer si les fibres optiques sont susceptibles de remplir leur fonction de manière satisfaisante. Il peut être nécessaire, en fonction des résultats de la surveillance et du contrôle des fibres de les remplacer pendant la durée de vie du réacteur nucléaire.

On connaît également des dispositifs de mesure de la température qui sont constitués par des thermocouples conventionnels et des moyens d'exploitation des signaux de mesure électrique fournis par les thermocouples. Les thermocouples conventionnels sont constitués par deux fils de nature différente séparés par des perles isolantes et reliés entre eux à l'une de leurs extrémités, généralement par soudure, pour constituer la soudure chaude du thermocouple qui est placée au plus près du point dont on veut connaître la température.

La seconde extrémité des fils du thermocouple est reliée aux moyens de mesure qui permettent de déterminer la température au niveau de la soudure chaude à partir d'une force électromotrice produite par effet thermoélectrique. Les deux fils du thermocouple sont isolés l'un de l'autre par des perles d'isolation en matériau réfractaire enfilées l'une à la suite de l'autre sur les fils du thermocouple. L'ensemble du thermocouple est protégé par une gaine. Pour la mesure de température inférieure à environ 1000°C, on utilise des perles d'isolation en oxyde de magnésium ou en alumine. Pour des températures plus élevées, on utilise des isolants en oxyde d'hafnium ou en oxyde de béryllium.

Pour mesurer les températures dans le fond du puits de cuve d'un réacteur nucléaire, lors du percement du fond de la cuve et de la chute du corium fondu, ces températures étant très élevées dans des zones du fond du puits de cuve qui peuvent s'étendre sur plusieurs mètres, l'utilisation de thermocouples conventionnels présente des inconvénients. En particulier, les isolants connus ne présentent pas des caractéristiques suffisantes pour que les thermocouples restent suffisamment isolés à proximité de la source de chaleur sur toute leur longueur et puissent fournir des mesures de température fiables, pendant une durée suffisamment longue après la fusion du coeur du réacteur nucléaire. Les perles perdent, dans ce cas, leur qualité isolante et les mesures données par les thermocouples sont, de ce fait, incorrectes. En effet, il est important d'obtenir le plus longtemps possible des indications sur l'évolution des températures dans le fond du puits de cuve, pour suivre l'évolution du percement du fond de la cuve, après la fusion du coeur.

Enfin, pour mesurer les températures en une pluralité de points du fond de puits de la cuve, à l'aplomb du fond de cuve, il est nécessaire d'utiliser un grand nombre de thermocouples et des moyens très complexes d'exploitation des mesures.

Le but de l'invention est donc de proposer un dispositif de détection et de surveillance du percement du fond de la cuve d'un réacteur nucléaire, comportant au moins un thermocouple, dans le cas d'une fusion du coeur du réacteur et d'équipements internes disposés à l'intérieur de la cuve qui présente une forme générale cylindrique et qui est placée avec son axe vertical, dans une partie du bâtiment du réacteur nucléaire, le dispositif de détection comportant au moins un thermocouple disposé à l'aplomb du fond de la cuve, ayant une première branche en un premier matériau métallique et au moins une seconde branche en un second matériau métallique différent du premier matériau, soudée en un point de la première branche, ce dispositif permettant de détecter et de surveiller le percement du fond de la cuve pendant une durée assez longue après le début de la fusion du coeur du réacteur nucléaire, de manière fiable et en mettant en oeuvre des moyens de mesure relativement simples, même dans le cas où l'on effectue des mesures de température en un très grand nombre de points du fond du puits de cuve du réacteur nucléaire.

Dans ce but, la première branche du thermocouple présente la forme d'un profilé creux allongé.

De préférence, une pluralité de secondes branches du thermocouple sont logées à l'intérieur du profilé creux et soudées sur une surface intérieure du profilé creux constituant ainsi l'enveloppe du thermocouple.

Afin de bien faire comprendre l'invention, on va maintenant décrire, à titre d'exemple non limitatif, en se référant aux figures jointes en annexe, plusieurs modes de réalisation d'un dispositif de détection et de surveillance du percement du fond de la cuve d'un réacteur nucléaire, suivant l'invention.

La figure 1 est une vue schématique en coupe verticale du bâtiment d'un réacteur nucléaire refroidi par de l'eau sous pression.

La figure 2 est une vue en coupe d'une partie du fond du puits de cuve d'un réacteur nucléaire à eau sous pression dans lequel sont placés des thermocouples d'un dispositif de détection et de surveillance suivant l'invention.

Les figures 3A et 3B sont des vues en perspective d'un premier et d'un second modes de réalisation de la première branche d'un thermocouple d'un dispositif suivant l'invention.

La figure 4A est une vue en coupe longitudinale d'un thermocouple d'un dispositif selon l'invention et selon le premier mode de réalisation.

La figure 4B est une vue en coupe longitudinale d'un thermocouple d'un dispositif selon l'invention et selon le seconde mode de réalisation.

La figure 5A est une vue partielle en coupe longitudinale d'une partie interne d'un thermocouple d'un dispositif suivant l'invention et suivant une première variante de réalisation.

La figure 5B est une vue en coupe longitudinale d'une partie interne d'un thermocouple d'un dispositif selon l'invention et selon une seconde variante de réalisation.

La figure 6 est une vue schématique de l'ensemble d'un dispositif de détection et de surveillance du percement du fond de la cuve d'un réacteur nucléaire, selon l'invention.

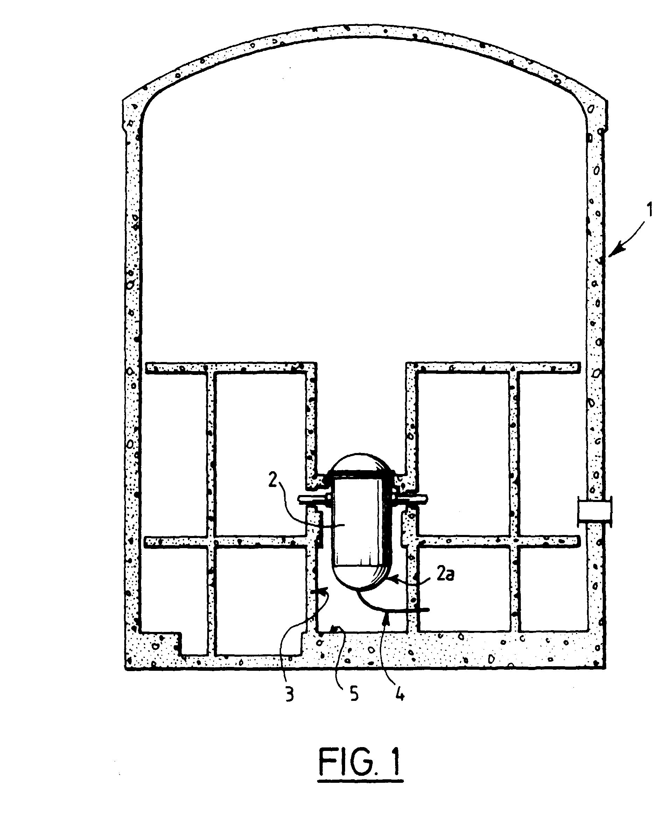

Sur la figure 1, on voit le bâtiment d'un réacteur nucléaire à eau sous pression désigné de manière générale par le repère 1. Le bâtiment du réacteur 1 est constitué par une structure en béton de grandes dimensions à l'intérieur de laquelle est ménagé un puits 3 à axe vertical dans lequel est disposée la cuve 2 du réacteur nucléaire de forme générale cylindrique renfermant le coeur du réacteur constitué par des assemblages de combustible. La cuve 2 est disposée dans le puits de cuve avec son axe placé suivant l'axe vertical du puits de cuve. Le puits de cuve 3 comporte un fond inférieur plat 5 qui se trouve en-dessous et à l'aplomb du fond bombé inférieur 2a de la cuve 2.

Le fond bombé 2a de la cuve est traversé par une pluralité de tubes de guidage d'instrumentation tel que le tube 4 représenté à titre d'exemple. Dans le cas d'un réacteur nucléaire d'une puissance électrique de 1000 MW, le fond 2a de la cuve du réacteur nucléaire est traversé par cinquante manchettes reliées chacune à un tube d'instrumentation. Chaque tube d'instrumentation permet de relier la manchette de traversée du fond de la cuve à un local de mesure situé dans une disposition latérale par rapport au puits de cuve dans le bâtiment du réacteur. L'ensemble de l'instrumentation du coeur permet de mesurer le flux neutronique et la température à l'intérieur du coeur pendant le fonctionnement du réacteur. Les manchettes de traversée des tubes d'instrumentation sont réparties sur toute la surface du fond 2a de la cuve.

Dans le cas d'une perte totale de la fonction de refroidissement du coeur, par défaillance du système de refroidissement principal et des systèmes de refroidissement auxiliaires du coeur, un tel accident ayant une probabilité très faible et pratiquement nulle, il peut se produire une fusion du combustible constituant le coeur du réacteur nucléaire et des équipements internes, la masse en fusion qui est alors formée étant appelée le corium. Le corium qui s'écoule dans le fond de la cuve du réacteur nucléaire peut provoquer une fusion partielle et/ou totale du fond de la cuve.

Le corium fondu peut s'écouler par une brèche formée dans le fond de la cuve et se répand sur le fond du puits de cuve.

Les opérateurs chargés de la conduite de la centrale n'ont pas alors d'indications visibles de l'évolution de la répartition du corium sur le fond du puits de la cuve, du fait que l'atmosphère ambiante dans le puits de cuve au cours de l'accident interdit toute inspection visuelle par un opérateur. La température au niveau du fond du puits de cuve augmente d'environ 100° à 1200° et plus et la pression passe d'une valeur proche de la pression atmosphérique à une valeur de l'ordre de 5 bars.

De manière à suivre l'évolution du phénomène de percement de la cuve et d'écoulement du corium sur le fond du puits de cuve, on utilise un dispositif de détection et de surveillance suivant l'invention comportant un réseau de thermocouples placés sur ou dans le fond du puits de cuve 5.

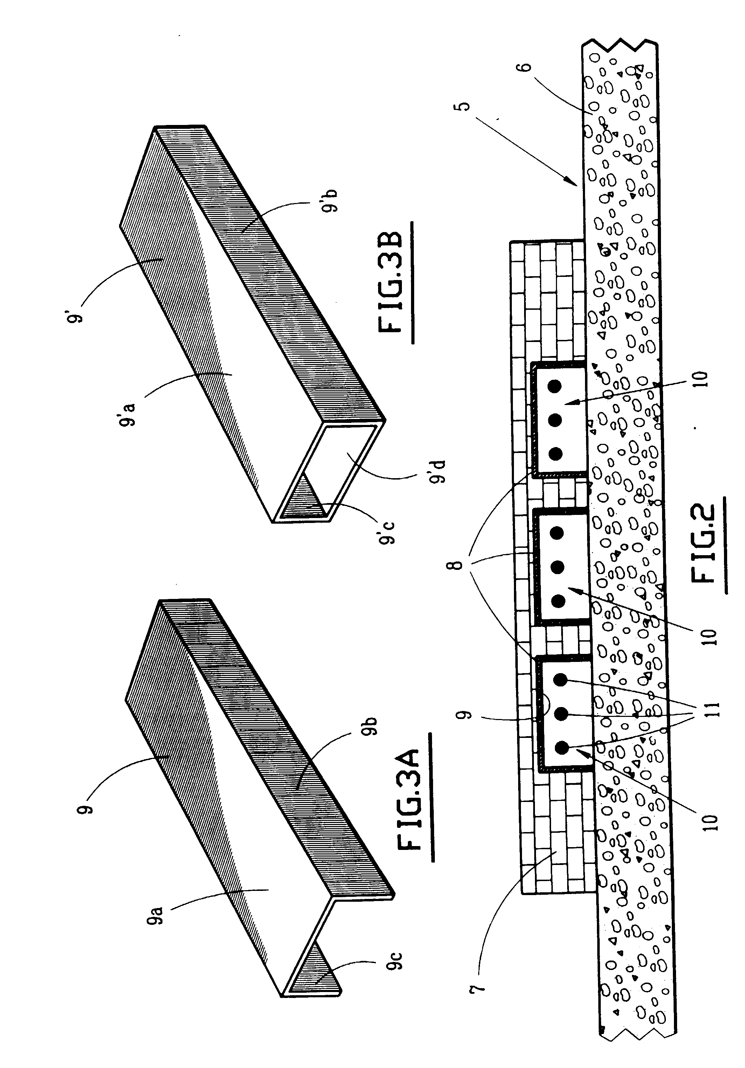

Sur la figure 2, on voit une partie du fond du puits de cuve 5 sur lequel ont été disposés des thermocouples d'un dispositif de détection et de surveillance suivant l'invention à l'intérieur d'un plancher 7 rapporté sur la dalle en béton 6 du fond de puits de cuve 5.

Le plancher rapporté 7 est constitué par des éléments de briquetage réfractaires susceptibles de résister aux températures élevées du corium s'écoulant sur le fond du puits de cuve 5 dans le cas d'un percement du fond de la cuve. De préférence, les éléments de briquetage sont en des matériaux analogues à ceux utilisés pour le garnissage des fours de métallurgie. Les éléments de briquetage sont assemblés de manière à ménager des canaux 8 de passage de thermocouples d'un dispositif de détection et de surveillance suivant l'invention et reliés entre eux de manière connue, par exemple en utilisant un béton réfractaire.

Dans le cas du fond de puits de cuve représenté sur la figure 2, les canaux 8 destinés à recevoir des thermocouples sont à section rectangulaire et parallèles entre eux. Ces canaux 8 peuvent s'étendre, par exemple dans une direction parallèle à un diamètre du fond de puits de cuve, suivant toute la zone du fond de puits de cuve située à l'aplomb du fond de la cuve.

Sur la figure 2, on n'a représenté que trois canaux 8 à l'intérieur de chacun desquels est disposé un thermocouple 10 d'un dispositif de détection et de surveillance suivant l'invention, disposés côte à côte sur le fond du puits de cuve mais il est possible bien entendu de prévoir un plus grand nombre de canaux 8, de manière à couvrir l'ensemble de la zone du fond de puits de cuve située à l'aplomb du fond de la cuve.

Chacun des thermocouples 10 comporte une première branche 9 ayant la forme d'un profilé creux à section rectangulaire ouvert à son extrémité inférieure et trois secondes branches 11 réalisées sous la forme de fils rigides sensiblement parallèles entre eux disposés suivant la direction longitudinale de la première branche 9. La première branche 9 du thermocouple 10 est logée à l'intérieur d'un canal 8 du plancher rapporté 7 du fond de puits de cuve de manière que sa surface externe épouse exactement la surface interne du canal 8 à section rectangulaire.

La face ouverte de la première branche 9 du thermocouple 10 est dirigée vers la dalle 6 du fond de puits de cuve.

Bien qu'on n'ait représenté que trois secondes branches 11 pour chacun des thermocouples 10, chacun de ces thermocouples peut comporter un plus grande nombre de secondes branches ou éventuellement une seule ou deux secondes branches sous la forme de fils rigides.

La première branche 9 des thermocouples 10 constitue une enveloppe à l'intérieur de laquelle sont disposées les secondes branches 11. La première branche 9 et les secondes branches 11 des thermocouples 10 sont en un matériau différent. Par exemple, la première branche 9 peut être réalisée en tungstène et les secondes branches 11 en un alliage tungstène-rhénium.

Sur la figure 3A, on a représenté la première branche 9 d'un thermocouple 10 analogue au thermocouple représenté sur la figure 2. La première branche 9 est réalisée sous la forme d'un profilé creux à section rectangulaire en U comportant un fond 9a, deux faces latérales 9b et 9c perpendiculaires au fond 9a et une face ouverte.

Sur la figure 3B, on a représenté un second mode de réalisation d'une première branche 9' d'un thermocouple d'un dispositif de détection suivant l'invention et suivant un second mode de réalisation. La première branche 9' du thermocouple suivant le second mode de réalisation est constitué sous la forme d'une enveloppe parallélépipédique à section rectangulaire comportant un fond supérieur 9'a, un fond inférieur 9'd et deux faces latérales 9'b, 9'c perpendiculaires deux à deux.

On verra par la suite que des thermocouples comportant une première branche sous la forme d'une enveloppe fermée 9' sont préférables dans le cas où l'on veut isoler complètement les secondes branches du thermocouples du milieu ambiant, par exemple pour éviter un contact des secondes branches avec de l'eau ou de la vapeur d'eau dans le fond du puits de cuve.

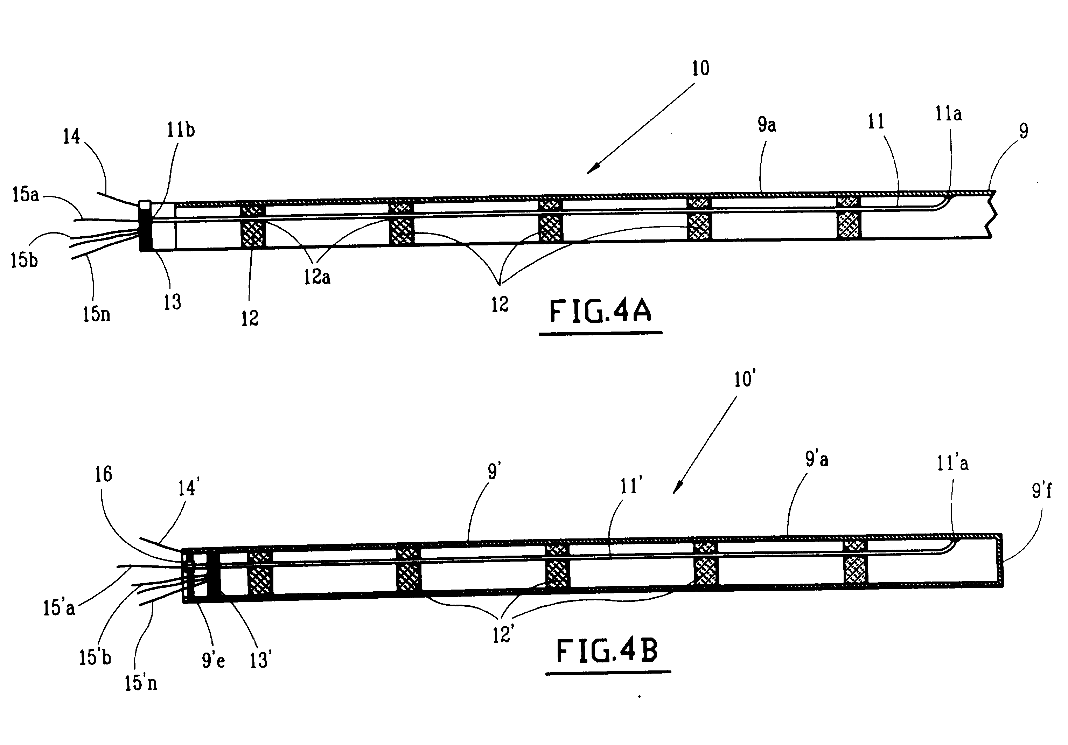

Sur la figure 4A, on voit un thermocouple 10 d'un dispositif de détection suivant l'invention comportant une première branche 9 ayant la forme d'un profilé en U rectangulaire tel que représenté sur la figure 3A à l'intérieur de laquelle sont fixés des plots 12 en matériau réfractaire permettant d'assurer le support des secondes branches telles que 11 du thermocouple 10. Les plots 12 sont réalisés en un matériau résistant à de très hautes températures telles que par exemple une céramique à base d'oxyde d'aluminium, d'oxyde d'hafnium ou encore d'oxyde de béryllium qui permette d'assurer le support et l'isolation des secondes branches 11 du thermocouple 10, suivant tout son trajet suivant la longueur de la première branche 9 du thermocouple 10. Chacun des plots 12 est traversé par une pluralité d'ouvertures 12a qui sont alignées par exemple dans une direction transversale perpendiculaire à la direction longitudinale de la première branche 9. La forme des ouvertures 12a est étudiée de façon à ce que la surface de contact entre les plots isolants 12 et les secondes branches 11 soient les plus faibles possible, ceci pour limiter les courants de fuites quand la température ambiante est élevée. Les ouvertures 12a des plots successifs 12 disposées à des distances sensiblement constantes suivant la longueur de la première branche 9 peuvent être d'autre part alignées dans une direction longitudinale, comme représenté sur la figure 4A pour assurer le support et le guidage des secondes branches 11 du thermocouple réalisées sous la forme de fil rigides par exemple à section circulaire. La section des fils est déterminée de façon à réduire le plus possible le nombre de plots 12.

Chacune des secondes branches 11 du thermocouple 10 comporte une extrémité lla soudée sur la surface intérieure du fond supérieur 9a de la première branche 9 pour constituer une soudure chaude du thermocouple et une seconde extrémité 11b reliée à un dispositif de connexion ou bornier 13 qui peut être par exemple fixé dans le briquetage du plancher rapporté du fond de puits de cuve dans le prolongement longitudinal de la première branche 9 du thermocouple 10 ou relié à une extrémité longitudinale de la première branche 9.

Le bornier 13 permet d'assurer le raccordement entre les branches du thermocouple et des fils de compensation assurant la liaison des branches du thermocouple aux moyens d'exploitation des mesures fournies par le thermocouple.

Un premier fil de compensation 14 est relié électriquement, par l'intermédiaire du bornier 13, à la première branche 9 du thermocouple.

Une pluralité de fils de compensation 15a, 15b, ..., 15n sont reliés, chacun, par l'intermédiaire du bornier 13, à une seconde branche 11 du thermocouple 10.

Chacun des fils de compensation peut être réalisé sous la forme d'un câble coaxial à isolant minéral.

Sur la figure 4B, on a représenté un thermocouple 10' selon le second mode de réalisation comportant une première branche 9' en tungstène réalisée sous la forme d'une enveloppe parallélépipédique telle que représentée sur la figure 3B et fermée à ses extrémités par deux faces de fermeture plane 9'e et 9'f. La première branche 9' du thermocouple 10' est ainsi réalisée sous la forme d'un boîtier totalement fermé de manière étanche à l'eau et à la vapeur, de manière que les secondes branches 11' et les soudures chaudes ll'a des secondes branches 11' du thermocouple 10', sur la surface intérieure du fond supérieur 9'a de la première branche 9', soient totalement isolées de l'atmosphère extérieure et en particulier protégées contre un contact avec de l'eau ou de la vapeur d'eau dans le fond du puits de cuve dans lequel est placé le thermocouple 10'.

Les secondes branches 11' du thermocouple 10' sont maintenues suivant la longueur de la première branche 9' par des plots 12' en matériau réfractaire isolant fixées à l'intérieur du boîtier constituant la première branche 9' du thermocouple 10' et réparties suivant la longueur de la première branche 9'. Le dispositif de connexion ou bornier 13' est fixé à l'intérieur de la première branche 9'.

Chacune des secondes branches 11' du thermocouple 10' est reliée au niveau du bornier 13', à un fil de compensation constitué par un câble coaxial 15'a, 15'b, ..., 15'n. La première branche 9' du thermocouple 10' est également reliée à un fil de compensation 14'.

Chacun des fils de compensation 15'a, 15'b, ..., 15'n relié à une seconde branche 11' du thermocouple 10' au niveau du bornier 13' traverse le fond de fermeture 9'e de la première branche 9' de manière étanche, par l'intermédiaire d'un presse-étoupe 16 ou d'un autre dispositif de traversée étanche équivalent.

Le thermocouple 10' peut être utilisé en particulier en atmosphère humide, sans que les mesures effectuées par le thermocouple au niveau de chacune de ses soudures chaudes telles que 11'a soient perturbées.

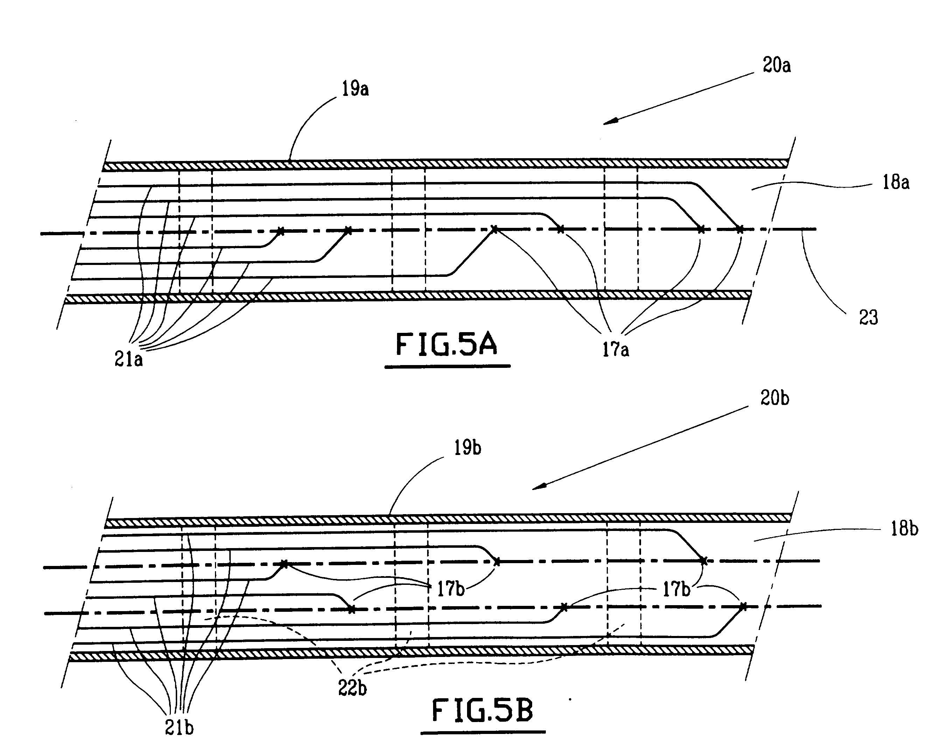

Sur les figures 5A et 5B, on voit deux variantes de réalisation, respectivement 20a et 20b d'un thermocouple d'un dispositif de détection et de surveillance suivant l'invention.

Le thermocouple 20a comporte une première branche 19a qui peut être constituée par exemple par un profilé en tungstène tel que représenté sur la figure 3A ou par un boîtier tel que représenté sur la figure 3B.

Une pluralité de secondes branches 21a sont disposées suivant la longueur de la première branche 19a et soudées à leur extrémité chacune sur la surface intérieure du fond supérieur 18a de la première branche 19a du thermocouple pour constituer des soudures chaudes 17a alignées suivant l'axe médian 23 du fond supérieur 18a de la première branche 19a.

On peut ainsi mesurer la température du fond du puits de cuve d'un réacteur nucléaire sur lequel est fixé le thermocouple 20a, en une pluralité de points alignés suivant une direction rectiligne du fond de puits de cuve.

Sur la figure 5B, on a représenté un thermocouple 20b dont la première branche 19b peut être analogue à la branche de thermocouple 19a et dont les secondes branches 21b constituées par des fils en un alliage tel que le tungstène-rhénium sont maintenus par des plots isolants et réfractaires 22b espacés suivant la direction longitudinale de la première branche 19b dans des dispositions parallèles.

Les secondes branches 21b du thermocouple 20b sont soudées sur la surface intérieure du fond supérieur 18b de la première branche 19b du thermocouple, en des points 17b constituant les soudures chaudes de chacun des thermocouples élémentaires constitués par la première branche 19b et une seconde branche 21b.

Les soudures chaudes 17b sont réparties suivant plusieurs directions longitudinaux du fond 18b de la première branche 19b parallèles entre elles. De plus, les soudures chaudes 17b sont disposées en quinconce par rapport à l'axe médian du thermocouple de manière que le thermocouple 20b permette de déterminer la température en différents points du fond du puits de cuve du réacteur nucléaire répartis suivant la longueur et suivant la largeur du profilé constituant la première branche 19b.

Bien entendu, on peut imaginer des répartitions des points de soudures chaudes des thermocouples du dispositif suivant l'invention différentes des répartitions représentées sur les figures 5A et 5B, en fonction de la dimension et de la forme des éléments profilés creux constituant les premières branches des thermocouples.

Dans le cas où la première branche du thermocouple est constituée sous la forme d'un boîtier, tel que représenté par exemple sur la figure 4B, le boîtier est rempli d'un gaz sec, par exemple de l'air, ou un gaz neutre qui assure une isolation parfaite entre les fils constituant les secondes branches des thermocouples et entre les fils et les parois du boîtier. On évite également la mise en contact des fils et des soudures chaudes avec une atmosphère humide.

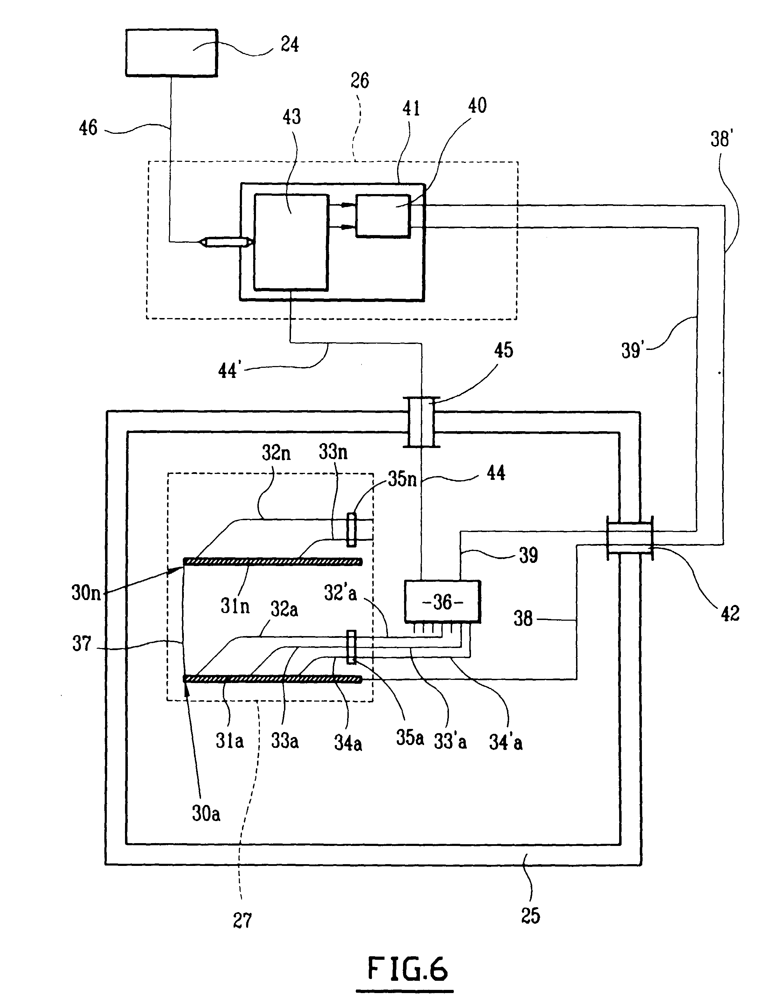

Sur la figure 6, on a représenté de manière schématique, l'ensemble d'un dispositif de détection et de surveillance du percement du fond d'une cuve d'un réacteur nucléaire, suivant l'invention.

Le dispositif comporte une partie disposée à l'intérieur du bâtiment de sécurité 25 du réacteur nucléaire et une partie située à l'extérieur du bâtiment de sécurité 25, dans une zone 26 d'acquisition des mesures voisine de la salle de commande du réacteur ou même disposée à l'intérieur de la salle de commande.

De plus, le dispositif suivant l'invention comporte un poste de commande et de visualisation 24 disposé à l'intérieur de la salle de commande du réacteur nucléaire.

Le dispositif suivant l'invention comporte, à l'intérieur du bâtiment de sécurité 25 du réacteur, un puits de cuve ayant un fond constitué par une dalle dont le contour 27 a été représenté en pointillé sur la figure 6.

La section horizontale du bâtiment réacteur 25 et le fond de puits de cuve 27 ont été représentés avec une forme carrée, bien que le bâtiment et le fond de puits de cuve présentent généralement une forme circulaire. Toutefois, bien entendu, l'invention s'applique quelle que soit la forme du bâtiment du réacteur et quelle que soit la forme du puits de cuve.

Sur le fond du puits de cuve 27 ont été disposés des thermocouples 30a, ..., 30n qui sont réalisés sous une forme analogue à celle représentée sur les figures 4A, 4B, 5A ou 5B.

Chacun des thermocouples 30a, ..., 30n comporte une première branche 31a, ..., 31n réalisée sous la forme d'un profilé creux ayant par exemple une section rectangulaire et une pluralité de secondes branches, telles que 32a, 33a, 34a en ce qui concerne le thermocouple 30a ou 32n, 33n en ce qui concerne le thermocouple 30n, qui sont constituées chacune par un fil en un matériau différent du matériau constituant la première branche 31a ou 31n, respectivement.

Pour rendre visibles les secondes branches des thermocouples, ces secondes branches ont été représentées à l'extérieur du profilé creux constituant la première branche mais en réalité, les secondes branches des thermocouples sont disposées à l'intérieur de la cavité ménagée par la première branche du thermocouple ou délimitée entre la première branche et le fond du puits de cuve.

On peut par exemple prévoir un ensemble de thermocouples 30a, ..., 30n dont les premières branches sont toutes parallèles entre elles et disposées avec un certain espacement, de manière à couvrir la plus grande partie du fond 27 du puits de cuve. Chacun des thermocouples 30a, ..., 30n comporte de plus une pluralité de secondes branches soudées à l'intérieur de la première branche, en des points espacés les uns des autres suivant la longueur de la première branche du thermocouple pour constituer un ensemble de soudures chaudes réparties suivant toute la surface du fond de puits de cuve 27. On dispose ainsi de moyens permettant d'effectuer une cartographie thermique complète du fond de puits de cuve 27.

L'ensemble des secondes branches d'un thermocouple, par exemple l'ensemble des secondes branches du thermocouple 30a (ou du thermocouple 30n) est relié, par l'extrémité des secondes branches opposée à la soudure chaude à un bornier 35a (dans le cas du thermocouple 30a) ou 35n (dans le cas du thermocouple 30n).

Chacune des secondes branches des thermocouples est reliée par l'intermédiaire du bornier du thermocouple, à un fil de compensation correspondant constitué par un câble coaxial isolé.

A titre d'exemple, on a représenté sur la figure 6, les fils de compensation 32'a, 33'a et 34'a reliés respectivement aux secondes branches 32a, 33a et 34a du thermocouple 30a.

Chacun des fils de compensation tels que 32'a, 33'a, 34'a est relié à l'entrée d'un commutateur 36 disposé à l'intérieur du bâtiment de sécurité du réacteur 25.

Les premières branches 31a, ..., 31n des thermocouples 30a, ..., 30n sont reliées entre elles électriquement, par l'intermédiaire d'un conducteur 37 qui est constitué de préférence par un fil en un matériau identique au matériau constituant les premières branches 31a, ..., 31n des thermocouples 30a, ..., 30n, par exemple un fil de tungstène.

La première branche de l'un des thermocouples, par exemple le thermocouple 30a est reliée par l'intermédiaire d'un premier fil de compensation 38 et d'un second fil de compensation et de liaison 38' à un module de traitement de signaux et de mesure 40 constituant une partie d'une centrale d'acquisition de mesures 41.

L'ensemble des premières branches des thermocouples peut également être mis à la terre.

Le commutateur 36 comporte une sortie unique qui est reliée, par l'intermédiaire de fils de compensation et de liaison 39, 39', au module de traitement et de mesure 40.

Les fils de compensation et de liaison 38 et 38' d'une part et 39 et 39' qui sont constitués par des conducteurs identiques sont reliés entre eux au niveau d'une pièce 42 de traversée étanche de la paroi de l'enceinte de sécurité 25 du réacteur nucléaire permettant d'assurer le passage étanche des différents conducteurs de mesure et de commande, à travers la paroi de l'enceinte de sécurité du réacteur, tout en assurant une isolation parfaite du volume intérieur du bâtiment de sécurité du réacteur par rapport à l'atmosphère extérieure.

Le module de traitement des signaux et de mesure 40 est relié, à l'intérieur de la centrale d'acquisition 41, à un module de commande et de transmission de données 43 qui est relié par l'intermédiaire de conducteurs 44 et 44' au commutateur 36 disposé à l'intérieur du bâtiment de sécurité 25 du réacteur nucléaire.

Les conducteurs de liaison 44 et 44' sont reliés électriquement entre eux au niveau d'une traversée étanche 45 de l'enceinte de sécurité 25 du réacteur nucléaire.

Le module de commande et de transmission 43 est relié par un câble 46, au poste de commande et de visualisation 24 disposé à l'intérieur de la salle de commande du réacteur nucléaire.

L'ensemble des fils de compensation reliés aux secondes branches d'un thermocouple tel que 30a ou 30n passe à l'intérieur d'un conduit qui assure la protection des fils de compensation entre le bornier et le commutateur. On évite ainsi une destruction et un sectionnement prématuré des liaisons entre les thermocouples et le commutateur 36 disposé dans le bâtiment de sécurité du réacteur, en cas de chute de corium sur le fond de puits 27 du réacteur nucléaire.

Le module de commande 43 assure, par l'intermédiaire des conducteurs 44' et 44, la commande du commutateur 36, de manière à envoyer successivement, à la sortie du commutateur 36 reliée à l'unité de traitement des signaux et de mesure 40 par l'intermédiaire des conducteurs 39 et 39', les signaux de mesure de chacun des thermocouples 30a, ..., 30n prélevés au niveau de chacune des secondes branches du thermocouple. La commande du commutateur de manière séquentielle permet de repérer l'origine de chacun des signaux de mesure et donc de déterminer la répartition des températures sur le fond 27 du puits de cuve.

Les résultats de mesure transmis par le module de traitement et de mesure 40 au module de commande et de transmission 43 sont envoyés au poste de commande et de visualisation 24 à l'intérieur de la salle de commande du réacteur nucléaire. Les résultats de mesure de température peuvent être affichés sur un écran, sous la forme d'une image du fond de puits du réacteur nucléaire comportant les valeurs des températures aux différents points de mesure répartis sur le fond du puits de cuve.

Le dispositif suivant l'invention permet donc de déterminer très rapidement et de manière très sûre les températures en une pluralité de points du fond du puits de cuve. Dans le cas d'une fusion du coeur et d'un percement de la cuve par le corium, le corium s'écoule sur le fond de puits, entraîne une élévation très rapide de la température dans la zone où se produit la chute du corium. On peut ainsi détecter un percement de la cuve et déterminer la zone du fond de la cuve disposée à l'aplomb du fond du puits de cuve dans laquelle s'est produite la percée.

Ces résultats sont obtenus avec un dispositif simple et résistant qui peut fonctionner pendant une certaine durée après le perçage de la cuve, du fait que les secondes branches de thermocouples sont protégées par la première branche réalisée sous la forme d'un profilé creux ou d'un boîtier. En outre, même si un thermocouple est détruit partiellement au moment de la chute du corium, il est susceptible de continuer à fournir certaines mesures de température du fait qu'il comporte une pluralité de secondes branches fournissant une pluralité de soudures chaudes assurant chacune une mesure de température.

En outre, le dispositif est susceptible de fonctionner parfaitement en atmosphère humide dans le cas ou l'on utilise une première branche des thermocouples constituée sous la forme d'un boîtier étanche.

L'invention ne se limite pas aux modes de réalisation qui ont été décrits.

C'est ainsi qu'on peut utiliser des thermocouples dont la première branche présente une forme profilée différente des formes qui ont été décrites.

La section du profilé creux allongé constituant la première branche du thermocouple peut présenter toute forme polygonale différente de la forme rectangulaire ou d'une forme carrée. Le profilé creux peut être ouvert suivant toute sa longueur sur l'une de ses faces et à ses extrémités ou au contraire réalisé sous la forme d'un boîtier complètement étanche.

Le dispositif suivant l'invention peut comporter des thermocouples disposés de manière quelconque les uns par rapport aux autres de manière à recouvrir la plus grande partie du fond du puits de cuve du réacteur nucléaire et présenter, suivant leur longueur, toute forme permettant de les adapter au mieux à la forme de la partie de structure du réacteur nucléaire sur laquelle ils sont montés, à l'aplomb du fond de la cuve. Les différents thermocouples peuvent être fixés sur le fond du puits de cuve ou sur la structure du bâtiment du réacteur de manière quelconque et protégés contre une chute de corium par tout moyen tel qu'un briquetage ou un revêtement réfractaire.

L'ensemble des premières branches des thermocouples utilisés peuvent être reliées entre elles électriquement et par exemple mises à la terre.

Les moyens d'exploitation des mesures associés aux thermocouples peuvent être disposés par rapport au bâtiment et à la salle de commande du réacteur nucléaire, d'une manière différente de celle qui a été décrite. Par exemple, le commutateur peut être placé à l'extérieur du bâtiment du réacteur dans un local électrique. Dans ce cas, le conducteur de liaison du module de commande au commutateur ne traverse pas la paroi du bâtiment de sécurité du réacteur. En revanche, il est nécessaire de prévoir une pluralité de traversées pour le passage de l'ensemble des fils de compensation reliés chacun à une seconde branche d'un thermocouple.

Il est également possible de prévoir, sur la sortie unique du commutateur, un boîtier de soudures froides qui permet une liaison au module de traitement de la centrale d'acquisition, par un fil de cuivre isolé.

L'invention s'applique non seulement dans le cas des réacteurs nucléaires refroidis par de l'eau sous pression mais également dans le cas d'autres types de réacteur nucléaire comportant une cuve dont le fond est susceptible d'être percé, lors d'une fusion du coeur du réacteur nucléaire.

## Revendications

1. Dispositif de détection et de surveillance du percement du fond (2a) de la cuve (2) d'un réacteur nucléaire dans le cas d'une fusion du coeur du réacteur et d'équipements internes disposés à l'intérieur de la cuve (2) qui présente une forme générale cylindrique et qui est placée avec son axe vertical, dans une partie (3) du bâtiment du réacteur nucléaire, le dispositif de détection comportant au moins un thermocouple (10, 10', 20a, 20b, 30a, 30n) disposé à l'aplomb du fond (2a) de la cuve (2), ayant une première branche (9, 9', 19a, 19b, 31a, 31n) en un premier matériau métallique et au moins une seconde branche (11, 11', 21a, 21b, 32a, 33a, 34a, 32n, 33n) en un second matériau métallique différent du premier matériau, soudée en un point de la première branche (9, 9', 19a, 19b, 31a, 31n), caractérisé par le fait que la première branche (9, 9', 19a, 19b, 31a, 31n) du thermocouple présente la forme d'un profilé creux allongé.

2. Dispositif suivant la revendication 1, caractérisé par le fait que la ou les secondes branches (11, 11', 21a, 21b) du thermocouple (10, 10', 20a, 20b) sont disposées à l'intérieur du profilé creux allongé constituant la première branche (9, 9', 19a, 19b) et soudées à l'une de leurs extrémités sur une surface intérieure du profilé creux allongé pour constituer une soudure chaude du thermocouple.

3. Dispositif suivant l'une quelconque des revendications 1 et 2, caractérisé par le fait que le profilé creux allongé constituant la première branche (9) du thermocouple présente une face ouverte et une section transversale rectangulaire en U.

4. Dispositif suivant l'une quelconque des revendications 1 et 2, caractérisé par le fait que la première branche (9') du thermocouple (10') présente la forme d'un boîtier parallélépipédique à section rectangulaire.

5. Dispositif suivant la revendication 4, caractérisé par le fait que le boîtier (9') constituant la première branche du thermocouple (10') est fermé à ses extrémités de manière étanche par des parois (9'e, 9'f).

6. Dispositif suivant la revendication 2, caractérisé par le fait que la ou les secondes branches (11, 11') du thermocouple (10, 10') sont maintenues à l'intérieur du profilé creux allongé (9, 9') constituant la première branche du thermocouple (10, 10'), par des plots (12, 12') en un matériau céramique réfractaire et isolant.

7. Dispositif suivant l'une quelconque des revendications 1 à 6, caractérisé par le fait que le thermocouple (20a, 20b) comporte une pluralité de secondes branches (21a, 21b) soudées chacune en un point constituant une soudure chaude (17a, 17b) sur la première branche (19a, 19b), les soudures chaudes (17a, 17b) de la pluralité de soudures chaudes étant réparties suivant la longueur de la première branche (19a, 19b) du thermocouple (20a, 20b).

8. Dispositif suivant la revendication 7, caractérisé par le fait que les soudures chaudes (17a) sont alignées suivant une direction longitudinale médiane de la première branche (19a) du thermocouple (20a).

9. Dispositif suivant la revendication 7, caractérisé par le fait que les soudures chaudes (17b) sont alignées suivant une pluralité de directions longitudinales de la première branche (19b) du thermocouple (20b) et disposées en quinconce dans la direction longitudinale.

10. Dispositif suivant l'une quelconque des revendications 1 à 9, caractérisé par le fait que le ou les thermocouples (10) reposent sur une dalle (6) constituant un fond de puits de cuve (3) dans lequel est disposée la cuve (2) du réacteur nucléaire et sont recouverts par une couche de protection réfractaire (7).

11. Dispositif suivant l'une quelconque des revendications 1 à 10, comportant une pluralité de thermocouples (30a, ..., 30n) répartis sur le fond (27) du puits de cuve d'un réacteur nucléaire, à l'intérieur du bâtiment de sécurité (25) du réacteur nucléaire, chacun des thermocouples (30a) comportant une pluralité de secondes branches (32a, 33a, 34a, 32n, 33n),
- un commutateur (36) ayant une pluralité de voies d'entrée reliées chacune, par l'intermédiaire d'un dispositif de connexion (35a, ..., 35n), à une seconde branche d'un thermocouple,
- un module (40) de traitement de signaux de mesure relié à une voie de sortie du commutateur (36),
- un module de commande et de transmission (43) relié au module de traitement de signaux de mesure (40) et au commutateur (36),
- ainsi qu'un poste de commande et de visualisation (24) relié au module de commande et de transmission (43).

12. Dispositif suivant la revendication 11, caractérisé par le fait que l'ensemble des premières branches (31a, ..., 31n) de la pluralité de thermocouples (30a, ..., 30n) sont reliés électriquement entre eux et au module de traitement des signaux de mesure (40).

13. Dispositif suivant l'une quelconque des revendications 11 et 12, caractérisé par le fait que le commutateur (36) est disposé à l'intérieur du bâtiment de sécurité (25) du réacteur nucléaire et que le module de traitement de signaux de mesure (40) et le module de commande et de transmission (43) constituant une unité d'acquisition de données (41) ainsi que le dispositif de visualisation et de commande (24) sont disposés à l'extérieur du bâtiment de sécurité (25) du réacteur nucléaire, les premières branches (31a ..., 31n) des thermocouples (30a, ..., 30n) de la pluralité de thermocouples et la voie de sortie du commutateur (36) étant reliées électriquement au module de traitement de signaux de mesure (40), par des conducteurs (38, 38', 39, 39') constituant des fils de compensation des thermocouples passant de manière étanche à travers la paroi de l'enceinte de sécurité (15) du réacteur nucléaire.

14. Dispositif suivant la revendication 13, caractérisé par le fait que le module de commande et de transmission (43) est relié au commutateur (36) pour assurer sa commande, par l'intermédiaire de conducteurs (44, 44') traversant de manière étanche l'enceinte de sécurité du réacteur (25).

15. Dispositif suivant l'une quelconque des revendications 11 à 14, caractérisé par le fait que le poste de visualisation et de commande (24) est disposé à l'intérieur d'une salle de commande du réacteur nucléaire.
